(19) Europäisches Patentamt
European Patent Office
Office européen des brevets

(11) **EP 4 362 138 A1**

(12) **EUROPEAN PATENT APPLICATION**
published in accordance with Art. 153(4) EPC

(43) Date of publication:
**01.05.2024 Bulletin 2024/18**

(21) Application number: **22891723.3**

(22) Date of filing: **12.10.2022**

(51) International Patent Classification (IPC):
***H01M 4/62*** (2006.01)

(52) Cooperative Patent Classification (CPC):
**H01M 4/13; H01M 4/131; H01M 4/133;**
**H01M 4/134; H01M 4/36; H01M 4/62;**
**H01M 10/0525; H01M 10/42; H01M 50/258;**
**Y02E 60/10**

(86) International application number:
**PCT/CN2022/124953**

(87) International publication number:
**WO 2023/082924 (19.05.2023 Gazette 2023/20)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **12.11.2021 CN 202111337252**

(71) Applicant: **Contemporary Amperex Technology**
**Co., Limited**
**Ningde, Fujian 352100 (CN)**

(72) Inventors:
• **HUANG, Ying**
**Ningde, Fujian 352100 (CN)**
• **YAO, Bin**
**Ningde, Fujian 352100 (CN)**
• **WANG, Hong**
**Ningde, Fujian 352100 (CN)**
• **LIU, Jiang**
**Ningde, Fujian 352100 (CN)**
• **LIU, Zhen**
**Ningde, Fujian 352100 (CN)**

(74) Representative: **Gong, Jinping**
**CocreateIP**
**Neumarkterstr. 21**
**81673 München (DE)**

(54) **ELECTRODE SHEET, LITHIUM ION BATTERY, BATTERY MODULE, BATTERY PACK, AND ELECTRICAL DEVICE**

(57) The present disclosure provides an electrode plate, a lithium-ion battery, a battery module, a battery pack, and an electric device. The electrode plates provided in the present disclosure comprise a current collector and an active substance layer disposed on at least one surface of the current collector, wherein the active substance layer comprises a surfactant lithium salt. The present disclosure utilizes the affinity between the surfactant lithium salt and the electrolyte to effectively reduce the surface tension of the electrolyte, enhance the wettability of the electrolyte on the electrode plate, reduce the interfacial impedance of the battery, and improve the utilization efficiency of the active substance, thereby realizing the improvement in the rate capability, discharge capacity, and service life of the lithium-ion battery.

FIG. 3

EP 4 362 138 A1

## Description

### Cross-References to Related Applications

The present disclosure claims priority to Chinese Patent Application No. 202111337252.X filed on November 12, 2021 with the Chinese Patent Office, and entitled "Electrode Plate, Lithium-ion Battery, Battery Module, Battery Pack and Electric Device", the contents of which are incorporated herein by reference in entirety.

### Technical Field

The present disclosure relates to the technical field of lithium batteries, and in particular relates to an electrode plate, a lithium-ion battery, a battery module, a battery pack, and an electric device.

### Background Art

Lithium-ion batteries are a type of secondary battery, and typically, lithium-ion batteries include a positive electrode plate, a negative electrode plate, an electrolyte, and a separator. During battery charging and discharging, active ions are embedded and dislodged back and forth between the positive and negative electrode plates. Electrolyte is the carrier of ion transmission in lithium-ion battery, which plays the role of conducting ions between positive and negative electrodes of lithium battery, and is the guarantee for lithium-ion battery to obtain the performance of high voltage and high specific energy. Electrolyte is generally made of high-purity organic solvents, electrolyte lithium salt, the necessary additives and other raw materials, under certain conditions, in certain proportions.

At present, lithium-ion batteries have been widely used in automobiles, cell phones and other high-tech products, as the field of lithium-ion battery applications continues to expand, but it further needs to improve lithium-ion batteries in all aspects of performance.

### Summary

The present disclosure is made in view of the above subject matter, and its object is to provide an electrode plate that improves the rate capability, discharge capacity, and service life of a lithium-ion battery, as well as a lithium-ion battery, a battery module, a battery pack, and an electric device that includes the electrode plate.

In order to achieve the foregoing object, the first aspect of the present disclosure provides an electrode plate, wherein the electrode plate comprises a current collector and active substance layer disposed on at least one surface of the current collector, wherein the active substance layer comprises a surfactant lithium salt.

The present disclosure effectively reduces the surface tension of the electrolyte by doping surfactant lithium salt in the active substance layer of the electrode plate, and utilizing the affinity of the lithium salt with the electrolyte, thereby enhancing the wettability of the electrolyte on the electrode plate, lowering the interfacial impedance of the battery, and increasing the utilization efficiency of the active substance, thereby realizing improvement in the rate capability, the discharge capacity, and the service life of the lithium-ion battery.

In any embodiment, the active substance layer is provided with a functional layer on a surface away from the current collector, wherein the functional layer further contains the surfactant lithium salt.

In any embodiment, the amount of substance of the surfactant lithium salt in the active substance layer is 0.00175 to 0.00875 mol.

In any embodiment, the surfactant lithium salt can be selected from at least one of lithium bis(trifluoromethanesulfonyl)imide, lithium nitrate, lithium perchlorate, or lithium chloride.

In any embodiment, the active substance layer comprises, in the direction away from the current collector, a plurality of active substance sub-layers disposed in a stacked manner with a coating mass per unit area varying from small to large, wherein the amount of the substance of the surfactant lithium salt contained in the plurality of active substance sub-layers varies from small to large. In these embodiments, the active substance layer in the electrode plate is coated with multiple layers, the surfactant lithium salt is further doped into each active substance sub-layer, separately, and the change rule of the amount of the surfactant lithium salt in each active substance sub-layer is in accordance with the change rule of the coating quality of the active substance in the active substance sub-layer, so as to exert a pore-making effect on each active substance sub-layer.

In any embodiment, the active substance layer comprises a first active substance sub-layer and a second active substance sub-layer disposed in a stacked manner in a direction away from the current collector. The first active substance sub-layer has a coating mass per unit area denoted as $CW_1$, wherein $0.150g/1540.25mm^2 \leq CW_1 \leq 0.200g/1540.25mm^2$. The coating mass per unit area of the second active substance sub-layer is denoted as $CW_2$, wherein $CW_2 \geq 0.200g/1540.25mm^2$. The amount of substance of the surfactant lithium salt in the first active substance sub-layer

is denoted as $M_1$, the amount of substance of the surfactant lithium salt in the second active substance sub-layer is denoted as $M_2$, and the amount of substance of the surfactant lithium salt in the functional layer is denoted as $M_3$, wherein $M_1/(M_1+ M_2+ M_3)$ is 10% to 30%, optionally, $M_1/(M_1+ M_2+ M_3)$ is 20%; $M_2/(M_1+ M_2+ M_3)$ is 20% to 40%, optionally, $M_2/(M_1+ M_2+ M_3)$ is 30%; and $M_3/(M_1+ M_2+ M_3)$ is 30% to 70%, and optionally, $M_3/(M_1+ M_2+ M_3)$ is 50%.

In any embodiment, the electrode plate is a positive electrode plate or a negative electrode plate.

The second aspect of the present disclosure provides a lithium-ion battery comprising a positive electrode plate, a negative electrode plate, a separator spaced between the positive electrode plate and the negative electrode plate, and an electrolyte, wherein the positive electrode plate and/or the negative electrode plate are/is the electrode plate provided in the first aspect of the present disclosure.

In any embodiment, the electrolyte is selected from an ester electrolyte, an ether electrolyte or an aqueous electrolyte.

In any embodiment, the electrolyte is a pure solvent electrolyte. That is, the electrolyte contains only the solvent without the electrolyte lithium salt. When the electrolyte does not contain electrolyte lithium salts, that is, when all lithium salts are doped into the active substance layer on the surface of the electrode or the functional coating on the surface of the active substance layer as a surfactant, and the electrolyte solvent is directly used as an electrolyte to be injected into the battery, the surfactant lithium salts in the electrode plate are dissolved in the electrolyte after the electrolyte solvent wets the electrode plate, thereby playing the role of ion conductivity. The advantage of using pure solvent as the electrolyte to inject into the battery is that the viscosity of the pure solvent is lower, and thus the wettability for the electrode plate will be better, and after the dissolution of the surfactant lithium salt mixed into the electrode plate, the pore making can be further realized for preparing porous electrodes, which can better promote the wettability of the electrolyte to the electrode plate.

In any embodiment, the solvent in the electrolyte is selected from at least one of ethylene carbonate, diethyl carbonate, dimethyl carbonate or methyl ethyl carbonate.

In any embodiment, the sum of the amounts of substance of the surfactant lithium salts in the active substance layer and the functional layer of the electrode plate is denoted as Mp; the amount of substance of lithium salts in the electrolyte is denoted as Ms; and the total volume of the electrolyte is denoted as Vs; then the lithium-ion battery satisfies: (Mp+Ms)/Vs is 1-2 mol/L; optionally, (Mp+Ms)/Vs is 1 mol/L. When the doping concentration of the surfactant lithium salt in the electrode plate is within a suitable range, the overall electrochemical performance of the lithium-ion battery is ensured by facilitating the wettability of the electrolyte on the electrode plate without producing adverse effects that affect the ionic conductivity and increase the polarization of the battery.

The third aspect of the present disclosure further provides a battery module, wherein the lithium-ion battery of the second aspect of the present disclosure is included.

The fourth aspect of the present disclosure further provides a battery pack, wherein a lithium-ion battery of the second aspect of the present disclosure or a battery module of the third aspect of the present disclosure is included.

The fifth aspect of the present disclosure further provides an electric device comprising a lithium-ion battery of the second aspect of the present disclosure or a battery module of the third aspect of the present disclosure or a battery pack of the fourth aspect of the present disclosure, wherein the lithium-ion battery or the battery module or the battery pack is used as a power source or energy storage unit of the electric device.

The lithium-ion battery provided in the second aspect of the present disclosure, the battery module provided in the third aspect, the battery pack provided in the fourth aspect, and the electric device provided in the fifth aspect have better rate capability, better discharge capacity, and longer service life due to the inclusion of the electrode plate of the first aspect of the present disclosure.

**Brief Description of Drawings**

FIG. 1 is a scanning electron micrograph of a photograph of the contact angle between a negative electrode plate without a surfactant lithium salt in the active substance layer and the electrolyte;

FIG. 2 is a scanning electron micrograph of a photograph of the contact angle between a negative electrode plate containing a low concentration of surfactant lithium salt in the active substance layer and the electrolyte;

FIG. 3 is a scanning electron micrograph of a photograph of the contact angle between the negative electrode plate containing a high concentration of surfactant lithium salt in the active substance layer and the electrolyte;

FIG. 4 is a schematic view of a lithium-ion battery of an embodiment of the present disclosure;

FIG. 5 is an exploded view of a lithium-ion battery of an embodiment of the present disclosure shown in FIG. 4;

FIG. 6 is a schematic view of a battery module of an embodiment of the present disclosure;

FIG. 7 is a schematic view of a battery pack of an embodiment of the present disclosure;

FIG. 8 is an exploded view of a battery pack of an embodiment of the present disclosure shown in FIG. 7; and

FIG. 9 is a schematic view of an electric device in which a lithium-ion battery is used as a power source in an embodiment of the present disclosure.

Reference numerals:

1-battery package; 2-upper box; 3-lower box; 4-battery module; 5-lithium-ion battery; 51-casing; 52-electrode assembly; 53-top cover assembly.

**Detailed Description of Embodiments**

Hereinafter, embodiments of lithium-ion batteries, battery modules, battery packs, and electrical devices of the present disclosure are specifically disclosed in detail with due reference to the drawings. But there will be cases where unnecessary details are omitted. For example, there are cases where detailed descriptions of matters that are already well known, and repetitive descriptions of practically the same structures, are omitted. This is to avoid the following description becoming unnecessarily lengthy and to facilitate understanding by those of ordinary skill in the art. In addition, the drawings and the following description are provided for the full understanding of the present disclosure by those of ordinary skill in the art and are not intended to limit the subject matter documented in the claims.

The "scope" disclosed in the present disclosure is defined in the form of a lower limit and an upper limit. A given scope is defined by selecting a lower limit and an upper limit, wherein the selected lower limit and upper limit define the boundaries of the particular scope. The ranges defined in this manner can include or exclude end values and can be combined in any way, which means that any lower limit can be combined with any upper limit to form a range. For example, if ranges of 60-120 and 80-110 are listed for a particular parameter, it is understood that ranges of 60-110 and 80-120 are also expected. In addition, if minimum range values 1 and 2 are listed, and if maximum range values 3, 4, and 5 are listed, the following ranges can all be expected 1-3, 1-4, 1-5, 2-3, 2-4, and 2-5. In the present disclosure, unless otherwise indicated, the value range "a-b" denotes an abbreviated representation of any combination of real numbers between a and b, where both a and b are real numbers. For example, the value range "0-5" represents that the context has been listed in all the real numbers between "0-5", and "0-5" is just an abbreviated representation of the combination of these values. Further, when expressing that a parameter is an integer $\geq 2$, it is equivalent to disclosing that the parameter is, for example, an integer 2, 3, 4, 5, 6, 7, 8, 9, 10, 11, 12, and the like.

All embodiments of the present disclosure, as well as optional embodiments, can be combined with each other to form new technical solutions, if not specifically stated.

All technical features of the present disclosure, as well as technical features, can be combined with each other to form new technical solutions, if not specifically stated.

If not otherwise specified, all steps of the present disclosure can be performed sequentially or randomly, preferably sequentially. For example, the method comprises steps (a) and (b), indicating that the method can comprise steps (a) and (b) performed sequentially or can comprise steps (b) and (a) performed sequentially. For example, the mentioned method can also include step (c), indicating that step (c) can be added to the method in any order. For example, the method can include steps (a), (b), and (c), or it can include steps (a), (c), and (b), or it can include steps (c), (a), and (b), and so on.

Unless otherwise specified, references to "include" and "comprise" in the present disclosure are open-ended and can be closed-ended. For example, the terms "include" and "comprise" can indicate that other components not listed can also be included or comprised, or that only the listed components can be included or comprised.

If not otherwise specified, the term "or" is included in the present disclosure. For example, the phrase "A or B" means "A, B, or both A and B". More specifically, the condition "A or B" is satisfied by any of the following: A is true (or exists) and B is false (or does not exist); A is false (or does not exist) and B is true (or exists), or both A and B are true (or exist).

**Electrode plate**

In one embodiment of the present disclosure, the present disclosure proposes an electrode plate, wherein the electrode plate comprises a current collector and an active substance layer disposed on at least one surface of the current collector, and the active substance layer comprises a surfactant lithium salt.

The present disclosure is based on the following inventive concept: inside the lithium-ion battery, when the wetting effect of the electrolyte is not good, the ion transmission path becomes farther, hindering the movement of lithium ions between the positive and negative electrodes, and the electrode plate that has not been contacted with the electrolyte can not participate in the battery electrochemical reaction, and at the same time the battery interfacial resistance increases, which affects the rate capability, the discharge capacity and the service life of the lithium battery. Inside a lithium-ion battery, the interfacial wettability of the electrolyte to the electrode can be expressed by Young's formula:

$$\gamma^{SV} = \gamma^{SL} + \gamma^{LV} \times \cos\theta$$

where $\gamma^{SV}$ is the surface tension of the electrode plate; $\gamma^{SL}$ is the surface tension of the contact surface between the electrolyte and the electrode; $\gamma^{LV}$ is the surface tension of the electrolyte itself; and $\theta$ is the contact angle between the electrolyte and the electrode.

From the above equation, it can be seen that the surface tension of the electrolyte determines the size of the contact angle in the case of a constant interface between the electrode plate and the gas phase: the lower the surface tension of the electrolyte is, the smaller the interfacial contact angle is, and the better the wettability of the electrolyte to the electrode plate is. On this basis, the applicant proposes that the surfactant lithium salt is doped in the active substance layer of the electrode plate, and when the electrode plate contacts with the electrolyte, the surfactant lithium salt is partially or wholly dissolved in the electrolyte, and the affinity of the surfactant lithium salt with the electrolyte is utilized to effectively reduce the surface tension of the electrolyte and enhance the wettability of the electrolyte to the electrode plate, thereby realizing the improvement in the rate capability, the discharge capacity, and the service life of the lithium-ion battery. The surfactant is inherently defined as a substance that causes a significant decrease in the surface tension of a target solution. The surfactant lithium salt described in the present disclosure means a lithium salt that causes a significant decrease in the surface tension of the electrolyte.

In some embodiments, the active substance layer is provided with a functional layer on a surface away from the current collector, wherein the functional layer further contains the surfactant lithium salt. In these embodiments, the active substance layer and the functional layer both contain surfactant lithium salt. When the electrode plate contacts with the electrolyte, the surfactant lithium salt in the active substance layer and the functional layer of the electrode plate is partially or completely dissolved in the electrolyte, and together they play the roles of lowering the surface tension of the electrolyte and improving the wettability of the electrolyte on the electrode plate, thus realizing the improvement in the rate capability, the discharge capacity, and the service life of the lithium-ion battery.

In some embodiments, the surfactant lithium salt is selected from at least one of lithium bis(trifluoromethanesulfonyl)imide (LiTFSI), lithium nitrate (LiNOs), lithium perchlorate (LiClO$_4$), lithium chloride (LiCl).

In some embodiments, the amount of substance of the surfactant lithium salt in the active substance layer is 0.00175-0.00875mol.

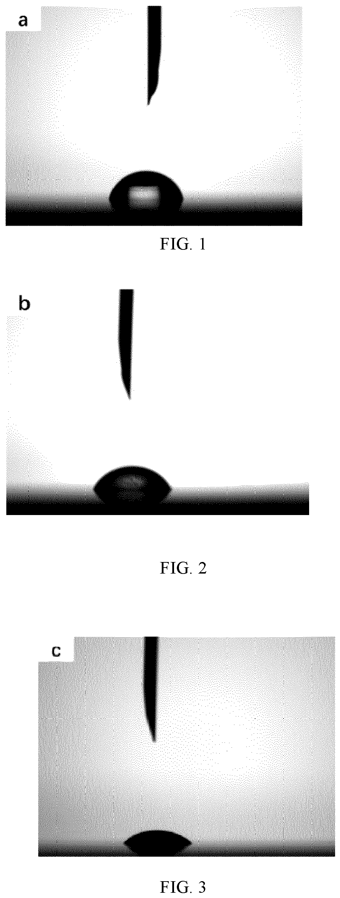

The inventors selected bis(trifluoromethanesulfonyl)imide lithium salt as the surfactant lithium salt, and configured an aqueous solution with concentrations of 5% and 10%, respectively, which was coated on the surface of the negative electrode plate. Subsequently, the contact angle of the negative electrode plates coated with two different concentrations to the electrolyte was tested, and the test results are shown in FIG. 1 to FIG. 3. FIG. 1 is a scanning electron micrograph of a photograph of the contact angle of a negative electrode plate without a surfactant lithium salt in the electrode plate or on the surface of the electrode plate, to the electrolyte; FIG. 2 is a scanning electron micrograph of a photograph of the contact angle of a negative electrode plate containing a low concentration of surfactant lithium salt in the electrode plate or on the surface of the electrode plate, to the electrolyte; and FIG. 3 is a scanning electron micrograph of a photograph of the contact angle of the negative electrode plate containing a high concentration of surfactant lithium salt in the electrode plate or on the surface of the electrode plate, to the electrolyte. The results of the contact angle tests in FIGS. 1 to 3 show that: the coating of the surfactant lithium salt can effectively improve the wetting effect between the electrolyte and the surface of the negative electrode plate, in which the coating of the surfactant lithium salt at a low concentration has shown the effectiveness of improving the wetting effect, and the wetting effect is better with the increase of the concentration of the surfactant lithium salt used.

In some embodiments, the active substance layer comprises, in a direction away from the current collector, a number of active substance sub-layers sequentially provided in a stacked manner with a coating mass per unit area varying from small to large, wherein the amount of the substance of the surfactant lithium salt contained in the number of active substance sub-layers further varies from small to large. In these embodiments, the active substance layer in the electrode plate is coated with multiple layers, the surfactant lithium salt is further doped into each active substance sub-layer separately, and the change rule of the amount of the surfactant lithium salt in each active substance sub-layer conforms with the change rule of the coating quality of the active substance in the active substance sub-layer, so as to exert a pore-making effect on each active substance sub-layer.

In some embodiments, the active substance layer comprises a first active substance sub-layer and a second active substance sub-layer arranged in a stacked manner in a direction away from the current collector, and the first active substance sub-layer has a coating mass per unit area denoted as $CW_1$, wherein $0.150g/1540.25mm^2 \leq CW_1 \leq 0.200g/1540.25mm^2$; and the second active substance sub-layer has a coating mass per unit area denoted as $CW_2$, wherein $CW_2 \geq 0.200g/1540.25mm^2$. The amount of the substance of the surfactant lithium salt in the first active substance sub-layer is denoted as $M_1$, the amount of the substance of the surfactant lithium salt in the second active substance sub-layer is denoted as $M_2$, and the amount of the substance of the surfactant lithium salt in the functional layer is denoted as $M_3$, wherein $M_1/(M_1+ M_2+ M_3)$ is 10% to 30%, and optionally, $M_1/(M_1+ M_2+ M_3)$ is 20%; $M_2/(M_1+ M_2+ M_3)$ is 20% to 40%, and optionally, $M_2/(M_1+ M_2+ M_3)$ is 30%; and $M_3/(M_1+ M_2+ M_3)$ is 30% to 70%, and optionally, $M_3/(M_1+ M_2+ M_3)$ is 50%.

In any embodiment, the electrode plate is a positive electrode plate or a negative electrode plate.

**Lithium-ion battery**

In another embodiment of the present disclosure, a lithium-ion battery is provided, which comprises a positive electrode plate, a negative electrode plate, a separator spaced between the positive electrode plate and the negative electrode plate, and an electrolyte, wherein the positive electrode plate and/or the negative electrode plate are/is the electrode plates provided in the first aspect of the present disclosure.

In some embodiments, the electrolyte comprises an ester electrolyte, an ether electrolyte or an aqueous electrolyte.

In some embodiments, the electrolyte is a pure solvent electrolyte. That is, the electrolyte contains only the solvent without the electrolyte lithium salt. When the electrolyte does not contain electrolyte lithium salts, that is, when all lithium salts are doped into the active substance layer on the surface of the electrode or the functional coating on the surface of the active substance layer as a surfactant, and the electrolyte solvent is directly used as an electrolyte to be injected into the battery, the surfactant lithium salts in the electrode plate are dissolved in the electrolyte after the electrolyte solvent wets the electrode plate, thereby playing the role of ion conductivity. The advantage of using pure solvent as the electrolyte to inject into the battery is that the viscosity of the pure solvent is lower, and thus the wettability for the electrode plate is better, and after the dissolution of the surfactant lithium salt mixed into the electrode plate, the pore-making can be further realized for preparing porous electrodes, which can better promote the wettability of the electrolyte to the electrode plate.

In some embodiments, the solvent in the electrolyte is selected from at least one of ethylene carbonate, diethyl carbonate, dimethyl carbonate or methyl ethyl carbonate.

In some embodiments, the sum of the amounts of substance of the surfactant lithium salts in the active substance layer and the functional layer of the electrode plates is denoted as Mp; the amount of substance of the lithium salts in the electrolyte is denoted as Ms; and the total volume of the electrolyte is denoted as Vs; the lithium-ion battery satisfies: $(Mp+Ms)/Vs$ is 1-2mol/L; optionally, $(Mp+Ms)/Vs$ is 1 mol/L. When the doping concentration of the surfactant lithium salt in the electrode plates is within a suitable range, the overall electrochemical performance of the lithium-ion battery is ensured by facilitating the wettability of the electrolyte on the electrode plates without producing adverse effects that affect the ionic conductivity and increase the polarization of the battery.

Further, the lithium-ion batteries, battery modules, battery packs, and electric devices of the present disclosure are described below with due reference to the drawings.

Typically, a lithium-ion battery includes a positive electrode plate, a negative electrode plate, an electrolyte, and a separator. During the process of battery charging and discharging, active ions are embedded and dislodged back and forth between the positive and negative electrode plates. The electrolyte has a function of conducting ions between the positive and negative electrode plates. The separator is arranged between the positive electrode plate and the negative electrode plate, which mainly plays a role in preventing the positive and negative electrodes from shortcircuiting, and at the same time allows ions to pass through.

[Positive electrode plate]

The positive electrode plate comprises a positive electrode current collector and a positive electrode active substance layer provided on at least one surface of the positive electrode current collector, and in some embodiments, the positive electrode active substance layer comprises a surfactant lithium salt. In some embodiments, a functional layer is provided on the surface of the positive electrode active substance layer away from the current collector, wherein the functional layer further comprises a surfactant lithium salt.

As an example, the positive current collector comprises two surfaces opposite each other in the direction of its own thickness, and the positive electrode active substance layer is provided on either or both of the two opposite surfaces of the positive electrode current collector.

In some embodiments, the positive electrode current collector can be a metal foil or a composite current collector. For example, as a metal foil, aluminum foil can be applied. The composite current collector can comprise a base layer of polymeric material and a metal layer formed on at least one surface of the base layer of polymeric material. The composite current collector can be formed by forming metallic materials (aluminum, aluminum alloys, nickel, nickel alloys, titanium, titanium alloys, silver and silver alloys, etc.) onto a base material of polymeric material (e.g., substrates of polypropylene (PP), polyethylene terephthalate (PET), polybutylene terephthalate (PBT), polystyrene (PS), polyethylene (PE), etc.).

The positive electrode active substance layer further includes the positive electrode active material. In some embodiments, the positive electrode active material can be a positive electrode active material known in the art for use in batteries. As an example, the positive electrode active material can comprise at least one of the following materials: a lithium-containing phosphate with an olivine structure, a lithium transition metal oxide, and respective modified compounds thereof. However, the present disclosure is not limited to these materials, and other conventional materials that can be utilized as positive electrode active material for battery can also be used. These positive electrode active materials can be used in only one alone or in a combination of more than two. The examples of the lithium transition metal oxides can comprise, but are not limited to, lithium cobalt oxides (e.g., $LiCoO_2$), lithium nickel oxides (e.g., $LiNiOz$), lithium manganese oxides (e.g., $LiMnO_2$, $LiMn_2O_4$), lithium nickel cobalt oxides, lithium manganese cobalt oxides, lithium nickel manganese oxides, lithium nickel cobalt manganese oxides (e.g., $LiNi_{1/3}Co_{1/3}Mn_{1/3}O_2$, also referred to as $NCM_{333}$; $LiNi_{0.5}Co_{0.2}Mn_{0.3}O_2$, also referred to as $NCM_{523}$; $LiNi_{0.5}Co_{0.25}Mn_{0.25}O_2$, also referred to as $NCM_{211}$; $LiNi_{0.6}Co_{0.2}Mn_{0.2}O_2$, also referred to as $NCM_{622}$; $LiNi_{0.8}Co_{0.1}Mn_{0.1}O_2$, also referred to as $NCM_{811}$); lithium-nickel-cobalt-aluminum oxides (e.g., $LiNi_{0.85}Co_{0.15}Al_{0.05}O_2$), and modified compounds thereof, and the like. The examples of lithium-containing phosphate with an olivine structure can comprise but are not limited to, at least one of lithium iron phosphate (e.g., $LiFePO_4$, also referred to as LFP), a composite material of lithium iron phosphate and carbon, lithium manganese phosphate (e.g., $LiMnPO_4$), a composite material of lithium manganese phosphate and carbon, lithium ferromanganese phosphate, and a composite material of lithium ferromanganese phosphate and carbon.

In some embodiments, the positive electrode film layer also optionally comprises a binder. As an example, the binder can comprise at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylenehexafluoropropylene copolymer, and fluorine-containing acrylate resin.

In some embodiments, the positive electrode film layer also optionally comprises a conductive agent. As an example, the conductive agent can comprise at least one of superconducting carbon, acetylene black, carbon black, Ketjen black, carbon dots, carbon nanotubes, graphene, and carbon nanofibers.

In some embodiments, the positive electrode plate can be prepared by following steps. The components described above for preparing the positive electrode plate, such as the positive electrode active material, the surfactant lithium salt (e.g., the surfactant lithium salt is included in the positive electrode active substance layer), the conductive agent, the adhesive, and any other components are dispersed in a solvent (e.g., N-methylpyrrolidone) to form a positive electrode slurry; and the positive electrode slurry is coated on the positive electrode current collector and dried. When a positive electrode functional layer is further provided on the surface of the positive electrode active substance layer, and the positive electrode functional layer further contains a surfactant lithium salt, the surfactant lithium salt is further prepared into an aqueous solution of a certain concentration, which is coated on the surface of the positive electrode plate, dried, and finally goes through process such cold press, such that the positive electrode plate can be obtained.

[Negative electrode plate]

The negative electrode plate comprises a negative electrode current collector and a negative electrode active substance layer provided on at least one surface of the negative electrode current collector, and in some embodiments, the negative electrode active substance layer comprises a surfactant lithium salt. In some embodiments, a functional layer is provided on the surface of the negative electrode active substance layer away from the current collector, wherein the functional layer further contains the surfactant lithium salt.

As an example, the negative electrode current collector comprises two surfaces opposite each other in the direction of its own thickness, and the negative electrode active substance layer is provided on either or both of the two opposite surfaces of the negative electrode current collector.

In some embodiments, the negative current collector can be a metal foil or a composite current collector. For example, as a metal foil, copper foil can be applied. The composite current collector can comprise a base layer of polymeric material and a metal layer formed on at least one surface of the base material of polymeric material. The composite current collector can be formed by forming metallic materials (copper, copper alloys, nickel, nickel alloys, titanium, titanium alloys, silver and silver alloys, etc.) onto a base material of polymeric material (e.g., substrates of polypropylene (PP), polyethylene terephthalate (PET), polybutylene terephthalate (PBT), polystyrene (PS), polyethylene (PE), etc.).

The negative electrode active substance layer further includes the negative electrode active material. In some embodiments, the negative electrode active material can be a negative electrode active material known in the art for use in batteries. As an example, the negative electrode active material can comprise at least one of the following materials: artificial graphite, natural graphite, soft carbon, hard carbon, silicon-based materials, tin-based materials, and lithium titanate, among others. The silicon-based materials can be selected from at least one of elemental silicon, silicon-oxygen compounds, silicon-carbon composites, silicon-nitrogen composites, and silicon alloys. The tin-based materials can be chosen from at least one of elemental tin, tin-oxygen compounds, and tin alloys. However, the present disclosure is not limited to these materials, and other conventional materials that can be utilized as negative electrode active material for battery cathodes can also be used. These negative electrode active materials can be used in only one alone or in a combination of more than two.

In some embodiments, the negative electrode film layer further optionally comprises a binder. The binder can be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer also optionally comprises a conductive agent. The conductive agent can be selected from at least one of superconducting carbon, acetylene black, carbon black, Ketjen black, carbon dots, carbon nanotubes, graphene, and carbon nanofibers.

In some embodiments, the negative electrode film layer can optionally comprise other additives such as thickeners, for example, carboxymethyl cellulose sodium (CMC-Na), among others.

In some embodiments, the negative negative electrode can be prepared by the following steps. The above-described components for preparing the negative electrode plate, such as the negative electrode active material, the surfactant lithium salt (e.g., the surfactant lithium salt is included in the negative electrode active substance layer), the conductive agent, the adhesive, and any other components are dispersed in a solvent (e.g., deionized water) to form a negative electrode slurry; and the negative electrode slurry is coated on the negative electrode current collector and dried. When a negative electrode functional layer is further provided on the surface of the negative electrode active substance layer, and the negative electrode functional layer further contains a surfactant lithium salt, the surfactant lithium salt is further prepared to an aqueous solution of a certain concentration, which is coated on the surface of the negative electrode plate, dried, and finally goes through cold press, such that the negative electrode plate can be obtained.

[Electrolyte]

The electrolyte acts as a conductor of ions between the positive and negative electrode plates. In some embodiments, the electrolyte includes electrolyte salts and organic solvents. The electrolyte in the present disclosure can be selected from an ester electrolyte, an ether electrolyte, or an aqueous electrolyte. In some embodiments, the electrolyte includes only organic solvents.

In some embodiments, the electrolyte lithium salt may be selected from at least one of lithium hexafluorophosphate, lithium tetrafluoroborate, lithium perchlorate, lithium hexafluoroarsenate, lithium bis(fluorosulfonimide), lithium bis(trifluoromethanesulfonyl)imide, lithium triflate, lithium difluorophosphate, lithium difluoro(oxalato)borate, lithium bis(oxalato)borate, lithium difluoro bis(oxalato)phosphate and lithium tetrafluoro(oxalato)phosphate.

In some embodiments, the organic solvent can be selected from at least one of ethylene carbonate, diethyl carbonate, dimethyl carbonate, or methyl ethyl carbonate.

In some embodiments, the electrolyte optionally further comprises additives. For example, the additives can include a negative electrode film-forming additive, a positive electrode film-forming additive, and can further include additives that can improve certain properties of the battery, such as additives that improve the overcharging performance of the battery, additives that improve the high or low temperature performance of the battery, and the like.

[Separator]

In some embodiments, the lithium-ion battery further includes a separator. The present disclosure has no special restriction on the type of separator, and any well-known porous-structure separator with good chemical and mechanical stability can be adopted.

In some embodiments, the material of the separator can be selected from at least one of fiberglass, nonwoven fabric, polyethylene, polypropylene, and polyvinylidene fluoride. The separator can be a single-layer film or a multilayer composite film, with no particular limitations. When the separator is a multilayer composite film, the materials of the layers can be the same or different without any particular limitation.

In some embodiments, the positive electrode plate, the negative electrode plate, and the separator can be made into an electrode assembly by a winding process or a stacking process.

In some embodiments, the lithium-ion battery can include an outer package. The outer package can be used to encapsulate the electrode assembly and electrolyte described above.

In some embodiments, the outer package of the lithium-ion battery can be a hard shell, such as a hard plastic shell, an aluminum shell, a steel shell, etc. The outer package of the lithium-ion battery can also be a soft package, such as a pouch-type soft package. The material of the soft package can be plastic, and as plastics, polypropylene, polybutylene terephthalate, and polybutylene succinate can be listed.

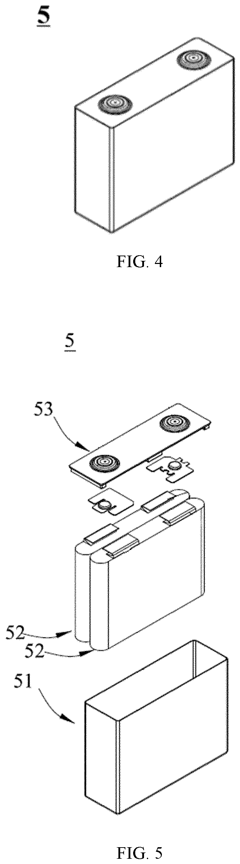

The present disclosure does not specifically limit the shape of the lithium-ion battery, which can be cylindrical, square, or any other arbitrary shape. For example, FIG. 4 is a squarestructured lithium-ion battery 5 as an example.

In some embodiments, referring to FIG. 5, the outer package can include a casing 51 and a cover 53, wherein the casing 51 can include a bottom plate and side plates attached to the bottom plate, the bottom plate and the side plates encloss to form a containing cavity. The casing 51 has an opening in communication with the containing cavity, and the cover 53 is capable of being provided over the opening to seal the containing cavity. The positive electrode plate, the negative electrode plate and the separator can be formed by a winding process or a stacking process to prepare an electrode assembly 52. The electrode assembly 52 is encapsulated within the containing cavity. The electrolyte wets the electrode assembly 52. The number of electrode assemblies 52 contained in the lithium-ion battery 5 can be one or more, and those of ordinary skill in the art can choose according to specific practical needs.

In some embodiments, the lithium-ion battery can be assembled into a battery module, wherein the battery module can contain one or more secondary batteries, the exact number of which can be selected by a person of ordinary skill in the art based on the application and capacity of the battery module.

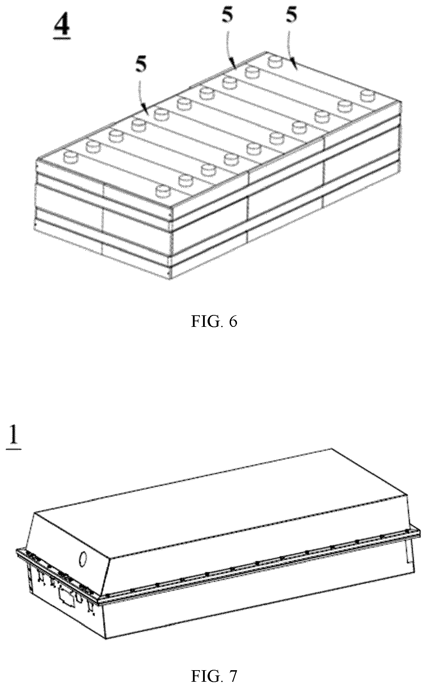

FIG. 6 is a battery module 4 as an example. Reffering to FIG. 6, in the battery module 4, the plurality of lithium-ion batteries 5 can be arranged in sequence along the length direction of the battery module 4. Certainly, it can be arranged in any other arbitrary manner. The plurality of lithium-ion batteries 5 can further be secured by fasteners.

Optionally, the battery module 4 can further comprise a casing having a containing space, in which the plurality of lithium-ion batteries 5 are accommodated.

In some embodiments, the above battery modules can further be assembled into a battery pack, wherein the number of battery modules contained in the battery pack can be one or more, the exact number of which can be selected by a person of ordinary skill in the art according to the application and capacity of the battery pack.

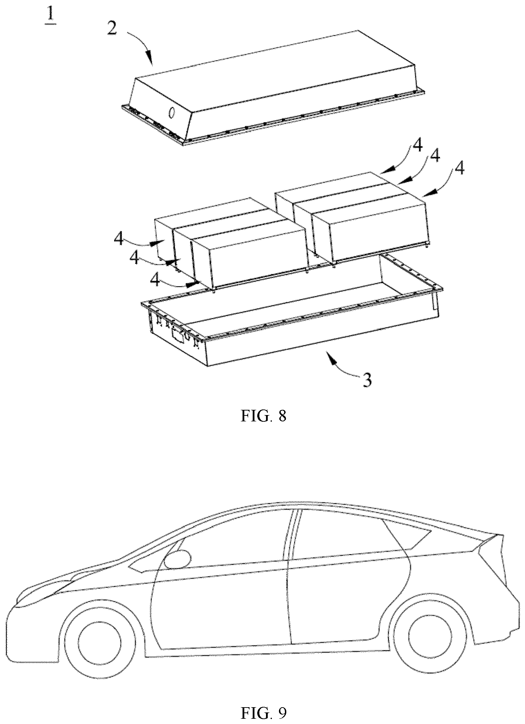

FIG. 7 and FIG. 8 is the battery pack 1 as an example. Referring to FIG. 7 and FIG. 8, the battery pack 1 can include a battery box and a plurality of battery modules 4 disposed in the battery box. The battery box includes an upper box 2 and a lower box 3, wherein the upper box 2 can be covered on the lower box 3 to form a closed space for accommodating the battery module 4. The plurality of battery modules 4 can be arranged in the battery box in any manner.

Additionally, the present disclosure further provides an electric device, wherein the electric device comprises at least one of a lithium-ion battery, a battery module, or a battery pack provided herein. The lithium-ion battery, battery module, or battery pack can be used as a power source for the electric device or as an energy storage unit for the electric device. The electric devices can include, but are not limited to, mobile devices (e.g., cell phones, laptops, etc.), electric vehicles (e.g., pure electric vehicles, hybrid electric vehicles, plug-in hybrid electric vehicles, electric bicycles, electric scooters, electric golf carts, electric trucks, etc.), electric trains, ships and satellites, energy storage systems, and the like.

As the electric device, a lithium-ion battery, a battery module or a battery pack can be selected according to the needs of its use.

FIG. 9 is an electrical device as an example. The electric device is a pure electric vehicle, a hybrid electric vehicle, or a plug-in hybrid electric vehicle, and so on. In order to meet the demand for high power and high energy density of lithium-ion batteries for this electric device, battery packs or battery modules can be used.

Another example device can be a cell phone, tablet, laptop, etc. The device is usually required to be thin and light, and can use a lithium-ion battery as a power source.

Example

In the following, examples of the present disclosure are described. The embodiments described below are exemplary and are intended to be used only for the purpose of explaining the present disclosure and are not to be construed as a limitation of the present disclosure. Where specific techniques or conditions are not indicated in the embodiments, the techniques or conditions described in the literature in the field are followed or in accordance with the product specification. The reagents or instruments used without indication of the manufacturer are conventional products that are commercially available.

I. Preparation of lithium-ion batteries

**Example 1**

1. Preparation of negative electrode plate

(1) The negative electrode active material (which was artificial graphite), surfactant lithium salt LiTFSI, conductive agent, adhesive (which was polyvinylidene fluoride (PVDF)) were dissolved in the solvent (which was N-methylpyrrolidone) according to a certain mass ratio, and were stirred under 500-700r/min for 3-4h to obtain the evenly mixed negative electrode slurry. The negative electrode slurry was uniformly coated on the front and back sides of the copper foil of current collector by a scraper, followed by drying at 85°C for 12h.

(2) The surfactant lithium salt LiTFSI was prepared into an aqueous solution of a certain concentration, which was coated on the surface of the negative electrode plate to prepare the negative electrode functional layer, and then dried at 85°C for 12h to obtain the negative electrode plate.

(3) Finally, the cold-pressed negative electrode plate was trimmed, cut and slit, then dried under vacuum at 110°C for 4h, and the tabs were welded to produce the negative electrode plate of lithium-ion battery.

2. Preparation of positive electrode plate

(1) The positive electrode active material lithium iron phosphate (LiFePO$_4$), surfactant lithium salt LiTFSI, conductive agent (which was Super-P), adhesive (which was polyvinylidene fluoride (PVDF)) according to the mass ratio of 96:2:2 were dissolved in the solvent (which was N-methylpyrrolidone) and mixed uniformly to make the positive electrode slurry. The positive electrode slurry was uniformly coated on the front and back sides of the aluminum foil of current collector, followed by drying at 85°C.

(2) The surfactant lithium salt LiTFSI was dissolved into NMP to form an organic solution of a certain concentration, and the resultant was coated on the surface of the positive electrode plate to prepare the positive electrode functional layer, which was then dried at 85°C for 12h to obtain the positive electrode plate.

(3) Finally, the cold-pressed positive electrode plate was trimmed, cut and slit, and dried under vacuum at 85°C for 4h, and the tabs were welded to produce the positive electrode plate of lithium-ion battery.

3. Preparation of electrolyte

In an argon atmosphere glove box with a water content <10 ppm, EC, PC, and DMC were mixed according to a weight ratio of EC:PC:DMC=3:3:3 to obtain a mixed organic solvent, and then LiPF6, a lithium salt that was sufficiently dried, was dissolved in the above mixed organic solvent and stirred well to obtain an electrolyte, wherein the concentration of LiPF6 was 1mol/L.

4. Preparation of lithium-ion battery

The positive electrode plate, negative electrode plate and separator (PE film, containing ceramic coating) of the lithium-ion battery prepared according to the aforementioned process were wound into a soft-packed battery core and then injected with liquid, left to stand at high temperature, and tested for capacity after formation.

**Examples 2-9, Comparative Examples 1-2**

The lithium-ion batteries of Examples 2-9 and Comparative Examples 1-2, were prepared in a similar manner to the lithium-ion battery of Example 1, except that the composition of the electrode plate of battery and the product parameters were adjusted.

**Examples 11-14**

The lithium-ion battery of Examples 11-14 were different from the lithium-ion battery of Example 1 in that Examples 11-14 utilized a layered coating of the active substance layer of the electrode plate. Specifically, the coating mass per unit area of the first active substance sub-layer of the positive and negative electrodes was 0.2g/1540.25mm$^2$, and the coating mass per unit area of the second active substance sub-layer of the positive and negative electrodes was 0.15/1540.25mm$^2$, and the size of the electrode plate was 42*49.5mm$^2$. In Examples 11-14, the surfactant lithium salt LiTFSI was further respectively doped into the individual active substance sub-layers.

II. Performance test of lithium-ion batteries

1. Capacity performance test

The capacity test method here is constant current and constant voltage test method, and the current value and voltage interval are set to test. The lithium-iron phosphate battery is taken as an example.

Step 1: charging to 3.65V at 0.33C;
Step 2: charging with a 3.65V constant voltage, wherein cutoff condition was 0.05C;
Step 3: sitting still for 5 minutes; and
Step 4: discharging to 2.5V at 0.33C, and measuring the capacity performance data when discharge was cut off.

2. Rate capability test

Step 1: charging to 3.65V at 0.5C;
Step 2: charging with a 3.65V constant voltage, wherein cutoff condition was 0.05C;
Step 3: sitting still for 5 minutes;
Step 4: discharging to 2.5V at 0.5C;
Step 5: cycling steps 1 to 4 for five times,
Step 6: charging to 3.65V at 0.7C;
Step 7: charging with a 3.65V constant voltage, wherein cutoff condition was 0.05C;
Step 8: sitting still for 5 minutes;
Step 9: discharging to 2.5V at 0.7C; and
Step 10: cycling steps 6 to 9 for five times.

In accordance with the above test sequence, the test current increased sequentially to test the battery at 1C, 1.2C, 1.5C and 2C, respectively, and the charging and discharging for each current density was run for 5 cycles to obtain the data of rate capability.

The parameters and performance test data of the lithium-ion batteries of Examples 1-14 and Comparative Example 1-2 are shown in Tables 1 and 2.

In Tables 1 and Table 2: the amount of the substance of the surfactant lithium salt in the first active substance sub-layer is noted as $M_1$, the amount of the substance of the surfactant lithium salt in the second active substance sub-layer is noted as $M_2$, and the amount of the substance of the surfactant lithium salt in the functional layer is noted as $M_3$. In the active substance layer and the functional layer of the electrode, the sum of the amounts of the substance of the surfactant lithium salts is denoted as Mp; the amount of the substance of the lithium salts in the electrolyte is denoted as Ms; and the total volume of the electrolyte is denoted as Vs.

Table 1

| | Type of surfactant lithium salt | Electrode Plate | | Electrolyte | | (Mp+Ms) /Vs (mol/ L ) | Performance test of batteries | |
| --- | --- | --- | --- | --- | --- | --- | --- | --- |
| | | Amount of substance of surfactant lithium salt in positive electrode layer and functional layer(m ol) | Amount of the substance of the surfactant lithium salt in the negative electrode layer(m ol) | The type of electrolyte lithium salt | The amount of substance of the electrolyte lithium salt (mol) | | Capacity performance | Rate capability |
| Example 1 | LiTFSI | 0.00087 5 | 0.00087 5 | LiPF$_6$ | 0.26584 25 | 1 | 0.33C 145mAh/g | 6C, 10%-80%SOC |
| Example 2 | LiTFSI | 0.00175 | 0.00175 | LiPF$_6$ | 0.53168 5 | 2 | 0.33C 143mAh/g | 4C, 10%-80%SOC |
| Example 3 | LiNO$_3$ | 0.00087 5 | 0.00087 5 | LiPF$_6$ | 0.26584 25 | 1 | 0.33C 142mAh/g | 5C, 10%-80%SOC |
| Example 4 | LiClO$_4$ | 0.00087 5 | 0.00087 5 | LiPF$_6$ | 0.26584 25 | 1 | 0.33C 144mAh/g | 5.3C, 10%-80%SOC |

(continued)

| | Type of surfact ant lithium salt | Electrode Plate | | Electrolyte | | (Mp+ Ms) /Vs (mol/ L ) | Performance test of batteries | |
|---|---|---|---|---|---|---|---|---|
| | | Amount of substan ce of surfacta nt lithium salt in positive electrod e layer and functio nal layer(m ol) | Amount of the substan ce of the surfacta nt lithium salt in the negativ e electrod e layer(m ol) | The type of electrol yte lithium salt | The amount of substan ce of the electrol yte lithium salt (mol) | | Capacity performance | Rate capability |
| Example 5 | LiCl | 0.00087 5 | 0.00087 5 | $LiPF_6$ | 0.26584 25 | 1 | 0.33C 140mAh/g | 3.3C, 10%-80%SOC |
| Example 6 | LiTFSI | 0.00175 | 0.00175 | / | 0 | 1 | 0.33C 144mAh/g | 4.2C, 10%-80%SOC |
| Example 7 | $LiNO_3$ | 0.00175 | 0.00175 | / | 0 | 1 | 0.33C 142mAh/g | 5C, 10%-80%SOC |
| Example 8 | $LiClO_4$ | 0.00175 | 0.00175 | / | 0 | 1 | 0.33C 144mAh/g | 5.3C, 10%-80%SOC |
| Example 9 | LiCl | 0.00175 | 0.00175 | / | 0 | 1 | 0.33C 140mAh/g | 3.3C, 10%-80%SOC |
| Comparat ive Example 1 | Null | 0 | 0 | $LiPF_6$ | 0.53168 5 | 1 | 0.33C 140mAh/g | 3.1C, 10%-80%SOC |
| Comparat ive Example 2 | LiTFSI | 0.00262 5 | 0.00262 5 | $LiPF_6$ | 0.79752 75 | 3 | 0.33C 140mAh/g | 3C, 10%-80%SOC |

Table 2

| | Surfactant lithium salt | Positive electrode plate/Negative electrode plate | | | | | | Electrolyte | | $(Mp+Ms)/Vs$ (mol/L) | Performance test of batteries | |
|---|---|---|---|---|---|---|---|---|---|---|---|---|
| | | First active substance sub-layer | | Second active substance sub-layer | | Functional layer | | The type of electrolyte lithium salt | The amount of substance of the electrolyte lithium salt (mol) | | Capacity performance | Rate capability (10 %-80% SOC) |
| | | Amount of the substance of the surfactant lithium salt (mol) | $M_1/(M_1+M_2+M_3)$ | Amount of the substance of the surfactant lithium salt (mol) | $M_2/(M_1+M_2+M_3)$ | The amount of the substance of the surfactant lithium salt (mol) | $M_3/(M_1+M_2+M_3)$ | | | | | |
| Example 10 | LiTFSI | 0.00004375 | 5% | 0.00035 | 40% | 0.00048125 | 55 % | LiPF$_6$ | 0.2658425 | 1 | 0.33C 140mAh/g | 3C |
| Example 11 | LiTFSI | 0.0000875 | 10% | 0.000175 | 20% | 0.0006125 | 70 % | LiPF$_6$ | 0.2658425 | 1 | 0.33C 143mAh/g | 5.5C |
| Example 12 | LiTFSI | 0.000175 | 20% | 0.0002625 | 30% | 0.0004375 | 50 % | LiPF$_6$ | 0.2658425 | 1 | 0.33C 145mAh/g | 6C |
| Example 13 | LiTFSI | 0.0002625 | 30% | 0.00030625 | 35% | 0.00030625 | 35 % | LiPF$_6$ | 0.2658425 | 1 | 0.33C 142mAh/g | 5C |
| Example 14 | LiTFSI | 0.00035 | 40% | 0.00039375 | 45% | 0.00013125 | 15 % | LiPF$_6$ | 0.2658425 | 1 | 0.33C 141mAh/g | 4C |

The performance data of the lithium-ion batteries of Examples 1-9 and Comparative Example 1 are compared: in Examples 1-9, a surfactant lithium salt is added to the active substance layer and the functional layer on the surface of the electrode plate, and by utilizing the affinity of the surfactant lithium salt to the electrolyte, the surface tension of the electrolyte is effectively reduced, thereby enhancing the wettability of the electrolyte to the electrode plate, and thus the discharge capacity and rate capability of the lithium-ion battery is significantly better than that of the Comparative Example 1 in which the surfactant lithium salt is not added to the surface of the electrode plate.

The performance data of the lithium-ion batteries of Examples 1-5 and Comparative Example 2 are compared: in the active substance layer and the functional layer of the electrode plate, the sum of the amounts of substance of the surfactant lithium is noted as Mp; the amount of substance of the lithium salt in the electrolyte is noted as Ms; and the total volume of the electrolyte is noted as Vs. When (Mp+Ms)/Vs is 1-2mol/L, the doping concentration of the surfactant lithium salt in the electrode plate is in a suitable range, which is not only favorable for the wetting of the electrolyte on the electrode plate, but also does not affect the ionic conductivity or increase the polarization of the battery, so as to ensure the overall electrochemical performance of lithium-ion batteries.

In Examples 6-9, the amount of substance Ms of the electrolyte lithium salt in the electrolyte is 0. When the electrolyte does not contain the electrolyte lithium salt, and the electrolyte solvent is directly used as an electrolyte injected into the battery, the surfactant lithium salt in the electrode is dissolved in the electrolyte when the electrolyte solvent wets the electrode plate to play the role of an ion conductor. By using a pure solvent as the electrolyte for injecting into the battery, the viscosity of the pure solvent is lower, such that the wettability for the electrode plates will be better, and after the dissolution of the surfactant lithium salt mixed into the electrode, the pore making can be further realized for preparing porous electrodes, which can better promote the wettability of the electrolyte to the electrode plate, and thus the lithium-ion batteries of Examples 6-9 further have better capacity performance and rate capability.

In Examples 10-14, the active substance layer of the lithium-ion battery includes two active substance sub-layers with different coating masses per unit area, and the surfactant lithium salt is also doped into each active substance sub-layer and the surface functional layer respectively in reasonable proportions, so as to play a better pore-making role, thereby providing the lithium-ion battery with a better capacity performance and rate capability.

It should be noted that the present disclosure is not limited to the above embodiments. The above embodiments are only examples, and embodiments having substantially the same composition and performing the same effect as the technical idea within the scope of the technical solution of the present disclosure are included in the technical scope of the present disclosure. Furthermore, within the scope of the present disclosure, other ways of constructing the embodiment by applying various deformations to the embodiment that can be thought of by a person of ordinary skill in the art, or by combining some of the constituent elements of the embodiment, are further included in the scope of the present disclosure.

## Claims

1. An electrode plate, wherein the electrode plate comprises a current collector and an active substance layer disposed on at least one surface of the current collector, wherein the active substance layer comprises a surfactant lithium salt.

2. The electrode plate according to claim 1, wherein the active substance layer is provided with a functional layer on a surface away from the current collector, wherein the functional layer further contains the surfactant lithium salt.

3. The electrode plate according to claim 1 or 2, wherein the surfactant lithium salt is selected from at least one of lithium bis(trifluoromethanesulfonyl)imide, lithium nitrate, lithium perchlorate and lithium chloride.

4. The electrode plate according to claim 1, wherein
an amount of substance of the surfactant lithium salt in the active substance layer is 0.00175 to 0.00875 mol.

5. The electrode plate according to any one of claims 1 to 4, wherein the active substance layer comprises, in a direction away from the current collector, a plurality of active substance sub-layers disposed in a stacked manner with a coating mass per unit area varying from small to large, wherein an amount of the substance of the surfactant lithium salt contained in the plurality of active substance sub-layers varies from small to large.

6. The electrode plate according to claim 5, wherein

   the active substance layer comprises a first active substance sub-layer and a second active substance sub-layer disposed in a stack in the direction away from the current collector, wherein
   the first active substance sub-layer has a coating mass per unit area denoted as $CW_1$, wherein

$0.150g/1540.25mm^2 \leq CW_1 \leq 0.200g/1540.25mm^2$; and a coating mass per unit area of the second active substance sub-layer is denoted as $CW_2$, wherein $CW_2 \geq 0.200g/1540.25mm^2$; an amount of substance of the surfactant lithium salt in the first active substance sub-layer is denoted as $M_1$, an amount of substance of the surfactant lithium salt in the second active substance sub-layer is denoted as $M_2$, and an amount of substance of the surfactant lithium salt in the functional layer is denoted as $M_3$, wherein
$M_1/(M_1 + M_2 + M_3)$ is 10% to 30%, optionally, $M_1/(M_1 + M_2 + M_3)$ is 20%;
$M_2/(M_1 + M_2 + M_3)$ is 20% to 40%, optionally, $M_2/(M_1 + M_2 + M_3)$ is 30%; and
$M_3/(M_1 + M_2 + M_3)$ is 30% to 70%, optionally, $M_3/(M_1 + M_2 + M_3)$ is 50%.

7. The electrode plate according to claim 6, wherein the electrode plate is a positive electrode plate or a negative electrode plate.

8. A lithium-ion battery, comprising a positive electrode plate, a negative electrode plate, a separator spaced between the positive electrode plate and the negative electrode plate, and an electrolyte, wherein the positive electrode plate and/or the negative electrode plate are/is the electrode plate according to any one of claims 1 to 7.

9. The lithium-ion battery according to claim 8, wherein the electrolyte is selected from an ester electrolyte, an ether electrolyte or an aqueous electrolyte.

10. The lithium-ion battery according to claim 8 or 9, wherein the electrolyte is a pure solvent electrolyte.

11. The lithium-ion battery according to any one of claims 8 to 10, wherein
a solvent in the electrolyte is selected from at least one of ethylene carbonate, diethyl carbonate, dimethyl carbonate or methyl ethyl carbonate.

12. The lithium-ion battery according to any one of claims 9 to 11, wherein a sum of amounts of substance of the surfactant lithium salt in the active substance layer and the functional layer of the electrode plate is denoted as Mp; an amount of substance of lithium salts in the electrolyte is denoted as Ms; and a total volume of the electrolyte is denoted as Vs, wherein the lithium-ion battery satisfies: (Mp+Ms)/Vs is 1-2 mol/L.

13. The lithium-ion battery according to claim 12, wherein (Mp+Ms)/Vs is 1 mol/L.

14. A battery module, wherein the battery module comprises the lithium-ion battery according to any one of claims 8 to 13.

15. A battery pack, wherein the battery pack comprises the lithium-ion battery according to any one of claims 8 to 13 or the battery module according to claim 14.

16. An electric device, wherein the electric device comprises at least one of the lithium-ion battery according to any one of claims 8 to 13, the battery module according to claim 14, or the battery pack according to claim 15.

FIG. 1

FIG. 2

FIG. 3

**5**

FIG. 4

5

53

52

52

51

FIG. 5

**4**    5    5

5

FIG. 6

**1**

FIG. 7

FIG. 8

FIG. 9

| | INTERNATIONAL SEARCH REPORT | International application No. |
|---|---|---|
| | | **PCT/CN2022/124953** |

**A.    CLASSIFICATION OF SUBJECT MATTER**

H01M 4/62(2006.01)i

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 极片, 电极, 正极, 负极, 阴极, 阳极, 浸润, 润湿 , 界面, 电解液, 表面活性剂, 锂, 双三氟甲磺酰亚胺锂, LITFSI, 硝酸锂, LiNO, 高氯酸锂, LiClO, 氯化锂, LiCl, cell, battery, electrode, positive, negative, cathode, anode, impregnate, interface, electrolyte, surfactant, lithium, Li

**C.    DOCUMENTS CONSIDERED TO BE RELEVANT**

| Category* | Citation of document, with indication, where appropriate, of the relevant passages | Relevant to claim No. |
|---|---|---|
| X | CN 110582872 A (ZHAMU ARUNA) 17 December 2019 (2019-12-17) description, paragraphs 65-118 | 1, 3, 4, 7-11, 14-16 |
| Y | CN 110582872 A (ZHAMU ARUNA) 17 December 2019 (2019-12-17) description, paragraphs 65-118 | 2, 3, 5-16 |
| X | CN 110582871 A (ZHAMU ARUNA) 17 December 2019 (2019-12-17) description, paragraphs 65-118 | 1, 3, 4, 7-11, 14-16 |
| Y | CN 110582871 A (ZHAMU ARUNA) 17 December 2019 (2019-12-17) description, paragraphs 65-118 | 2, 3, 5-16 |
| Y | CN 104752684 A (BYD CO., LTD.) 01 July 2015 (2015-07-01) abstract | 2, 3, 5-16 |
| Y | CN 110660969 A (TSINGHUA SHENZHEN INTERNATIONAL GRADUATE SCHOOL) 07 January 2020 (2020-01-07) abstract | 2, 3, 5-16 |
| Y | CN 110247013 A (NINGDE CONTEMPORARY AMPEREX TECHNOLOGY CO., LTD.) 17 September 2019 (2019-09-17) description, paragraphs 3-65 | 5-16 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 December 2022** | **17 January 2023** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**EP 4 362 138 A1**

**INTERNATIONAL SEARCH REPORT**

| International application No. |
| --- |
| **PCT/CN2022/124953** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 110828779 A (DONGGUAN VEKEN BATTERY CO., LTD. et al.) 21 February 2020 (2020-02-21)<br>      entire document | 1-16 |

Form PCT/ISA/210 (second sheet) (January 2015)

21

**INTERNATIONAL SEARCH REPORT**
Information on patent family members

International application No.

**PCT/CN2022/124953**

| Patent document cited in search report | | | Publication date (day/month/year) | Patent family member(s) | | | Publication date (day/month/year) |
|---|---|---|---|---|---|---|---|
| CN | 110582872 | A | 17 December 2019 | JP | 2020509542 | A | 26 March 2020 |
| | | | | KR | 20190120796 | A | 24 October 2019 |
| | | | | US | 2018248189 | A1 | 30 August 2018 |
| | | | | WO | 2018156330 | A1 | 30 August 2018 |
| CN | 110582871 | A | 17 December 2019 | US | 2018241032 | A1 | 23 August 2018 |
| | | | | KR | 20190118182 | A | 17 October 2019 |
| | | | | WO | 2018151945 | A1 | 23 August 2018 |
| CN | 104752684 | A | 01 July 2015 | None | | | |
| CN | 110660969 | A | 07 January 2020 | None | | | |
| CN | 110247013 | A | 17 September 2019 | None | | | |
| CN | 110828779 | A | 21 February 2020 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111337252X